# EUROPEAN PATENT SPECIFICATION

(11) **EP 0 909 367 B1**
(45) Date of publication and mention of the grant of the patent: **19.12.2001**
(21) Application number: 98902754.5
(22) Date of filing: 17.02.1998
(51) Int. Cl.: F16L 47/02

(54) **METHOD AND FITTING FOR JOINING PLASTICS COMPONENTS**
VERFAHREN UND ANSCHLUSSSTÜCK FÜR DIE VERBINDUNG VON KUNSTSTOFFTEILEN
PROCEDE ET RACCORD POUR ACCOUPLER DEUX PIECES EN PLASTIQUE

(30) Priority: 18.02.1997 US 3827 P
(43) Date of publication of application: 21.04.1999
(73) Proprietor: UPONOR ALDYL COMPANY, Hockessin, Delaware 19707 (US)
(72) Inventor: SMITH, Cynthia, Lee, Mountain View, CA 94043 (US)
(74) Representative: Lunt, Mark George Francis
(86) International application number: IB9800211
(87) International publication number: WO9837353

(56) References cited:
- EP-A- 0 510 803
- EP-A- 0 645 234
- US-A- 5 125 690
- US-A- 5 254 824

## Description

This invention relates to a method and a fitting for joining plastics components together, particularly polyethylene components, and especially pipes.

It is known to join plastics components by fusion where two components are mated together, their mating surfaces are heated until they reach the fusion temperature of the plastics material from which the components are constructed, whereupon fusion occurs between the mating surfaces and the components are then allowed to cool so that the material freezes and a secure joint between the two components is made, see for example US-A-5 125 690 and US-A-5 254 824.

However, an oxide layer is typically found or formed on plastics surfaces over time and this can prevent effective fusion between two surfaces unless the oxide layer is scraped from the surface prior to joining. Such scraping is a time consuming preparation step, and must be done thoroughly to ensure a complete fusion.

It is an object of the present invention to provide a method of fusion and a fitting which does not require, or at least reduces the requirement for, scraping prior to fusion.

In accordance with a first aspect of the present invention there is provided a method of joining two plastics components by fusion, comprising: mating the two components; heating the mating surfaces until they reach the fusion temperature of the plastics material from which the components are constructed; moving the components with respect to one another when their surfaces are molten in a direction parallel said mating surfaces; holding the components still after said moving step and allowing the surfaces to cool and freeze, and characterised in that the mating surface of at least one of the components has holes distributed evenly over it.

By moving the components with respect to one another, the oxide layer is broken and the plastics material of each component is thoroughly mixed to allow for good and proper fusion therebetween to occur.

When the plastics become molten, flow into the holes is effected to enhance such breaking of the oxide layer and mixing of the molten plastics. Preferably the holes are blind holes.

Thus the method is preferred when the components are not scraped immediately prior to said mating step, so that this inconvenience can be avoided.

Preferably said components are a pipe and a fitting having a socket to receive an end of said pipe, and in which said direction is rotational about the axis of the pipe. Alternatively, said direction may be axial. Thus, when a fitting has been assembled on the end of a pipe and the mating surfaces are heated until they become molten, the fitting can simply be rotated about the axis of the pipe with respect to the pipe to effect such breaking of the oxide layer and mixing of the molten plastics.

Indeed, in accordance with a further aspect of the present invention there is provided a plastics fitting for joining to a plastics component by fusion, the fitting comprising a mating surface adapted to mate with a corresponding surface of the component, heating means adapted to raise the temperature of the mating surface of the fitting to above the fusion temperature of the plastics material of the fitting, characterised in that the fitting further comprises a plurality of holes formed in the mating surface of the fitting and evenly distributed over said surface and in that said heating means comprises an electrofusion cage adapted to be heated by the passage of electric current therethrough. Said electric current may be inductively generated.

Preferably the holes are blind and preferably said component is a pipe and said fitting includes a socket to receive an end of the pipe.

Preferably said holes correspond with apertures in said cage and said cage is preferably disposed in or on the surface of the fitting.

The invention is further described hereinafter, by way of example, with reference to the accompanying drawings, in which:

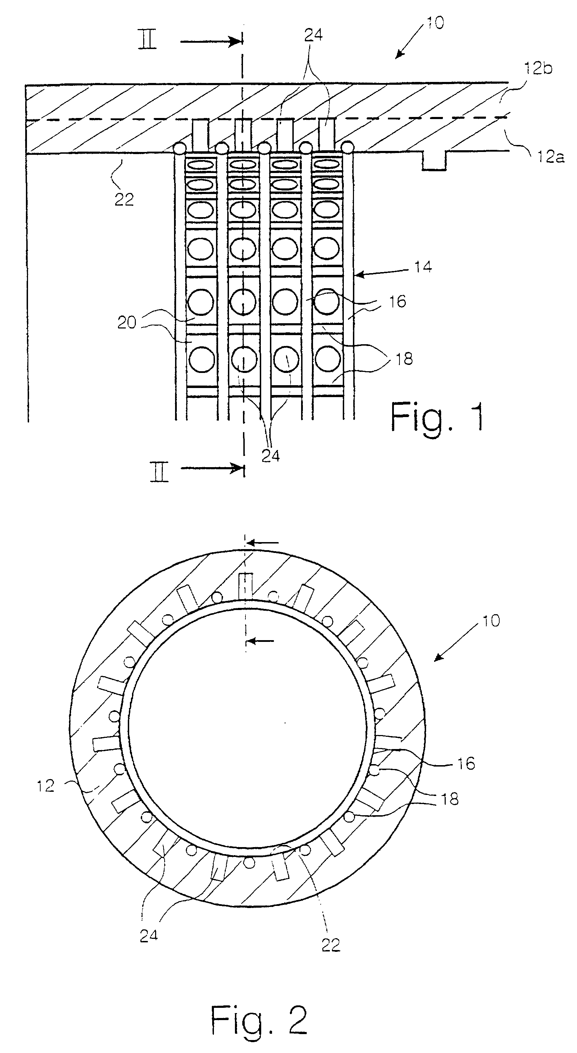

Figure 1 is a longitudinal partial section through an electrofusion fitting in accordance with the present invention (along the line I-I in Figure 2); and,
Figure 2 is a section on the line II-II in Figure 1.

In the drawings, an electrofusion fitting 10 comprises a plastics sleeve 12 having formed in its surface a cage 14 comprising circumferential rings 16 and axially disposed interlinks 18 which, with the rings 16, define windows or apertures 20. In the surface 22 of the fitting 10 in the region of the cage 14 there are disposed a plurality of holes 24. Typically these may be separated, centre to centre, by about 2.5mm both axially and circumferentially and each may have a diameter of about 1.25mm. Their depth may be likewise about 1.25mm. It is not essential that the holes correspond with the apertures 20, but this may be the most convenient arrangement.

The fitting 10 is a sleeve and is adapted to slide over the end of a pipe (not shown) to be joined to the fitting. The fitting may have a similar arrangement of cage and holes at another location so that two pipes may be joined end to end, for example.

The cage 14 is moulded in the fitting 12 so that it lies in the surface 22. The holes 24 are formed by protrusions from a mould core (not shown) extending through the windows 20 of the cage. Alternatively, the sleeve 12 may be moulded in two parts, a first inner part 12a being moulded with through holes 24 formed by inwardly directed protrusions on the inside of a shell-type mould (not shown), with the cage 24 bearing against said protrusions, and an outer sleeve part 12b which is over-moulded the inner part 12a to close the holes 24. Indeed, it is desirable that the holes 24 are blind, so that the pressures which develop when the plastics material melts on heating by the cage 14 are maintained. Those pressures help to ensure the mixing and fusing process.

Preferably, the cage 14 is heated by inductive coupling with an externally generated magnetic field inducing alternating currents in the cage 14.

It is a feature of the present invention that when the sleeve 12 is inserted over the end of a pipe (not shown) and the cage 14 is heated to a temperature above the melting point of the plastics materials of the pipe and fitting, the molten plastic flows into the holes 24 and such flow causes the break-up of any oxide layer on the pipe or on surface 22. There is then nothing to prevent intimate mixing of the components of the sleeve and pipe so that on subsequent cooling of the heater element 14 and freezing of the plastics material a sound fusion bond between the pipe and fitting is made.

Even if holes 24 are omitted, it is a second aspect of the present invention that, if the sleeve is rotated around the pipe after the cage 14 has been heated to beyond the melting point of the plastic material of the pipe and fitting, such movement also causes breaking up of the oxide layer and effective mixing of the two molten plastics materials.

In either event, therefore, prior scraping of the pipe to break up the oxide layer is no longer necessary.

The present invention does find particular application with inductive heaters 14 because there is no danger that movement of the fitting with respect to the pipe might cause short circuiting of electrical coils, which might be a problem if the invention is applied to normal electrical resistance heater coils. Should short circuiting occur with normal resistance heating coils, then firstly too much current might flow in the remaining turns of the short-circuited coil and, secondly, no current would flow in the limb or limbs of the coil which are isolated by the short circuit. Consequently, very uneven heating of the respective components follows when short circuiting occurs.

Although it is preferred that the holes 24 are blind for the reasons mentioned above, it is not necessarily essential that they be blind.

## Claims

1. A method of joining two plastics components by fusion comprising:-
mating the two components;
heating the mating surfaces until they reach the fusion temperature of the plastics material from which the components are constructed;
moving the components with respect to one another when their surfaces are molten in a direction parallel said mating surfaces;
holding the components still after said moving step and allowing the surfaces to cool and freeze,
**characterised in that** the mating surface of at least one of the components has holes distributed evenly over it.

2. A method as claimed in claim 1, in which the components are not scraped immediately prior to said mating step.

3. A method as claimed in claim 1 or 2, in which said components are a pipe and a fitting having a socket to receive an end of said pipe, and in which said direction is rotational about the axis of the pipe.

4. A method as claimed in any preceding claim in which said holes are blind.

5. A method as claimed in any preceding claim, in which the fitting has said holes.

6. A plastics fitting for joining to a plastics component by fusion, the fitting comprising a mating surface adapted to mate with a corresponding surface of the component, heating means adapted to raise the temperature of the mating surface of the fitting to above the fusion temperature of the plastics material of the fitting, **characterised in that** the fitting further comprises a plurality of holes formed in the mating surface of the fitting and distributed over said surface and **in that** said heating means comprises an electrofusion cage adapted to be heated by the passage of electric current therethrough.

7. A plastics fitting as claimed in claim 6, in which said holes are blind.

8. A plastics fitting as claimed in claim 6 or 7, in which said component is a pipe and said fitting includes a socket to receive an end of the pipe.

9. A plastics fitting as claimed in any of claims 6 to 8, in which said electric current is inductively generated.

10. A plastics fitting as claimed in any of claims 6 to 9, in which said holes correspond with apertures in said cage.

11. A plastics fitting as claimed in any of claims 6 to 10, in which said holes are cylindrical.

12. A plastics fitting as claimed in claim 11, in which said holes have a diameter of about 1.25mm and a depth of about 1.25mm.

13. A plastics fitting as claimed in any of claims 6 to 12, in which said holes are separated from one another by about 2.5mm centre to centre of adjacent holes.

14. A plastics fitting as claimed in any of claims 6 to 13, in which said plastics material is polyethylene.

## Patentansprüche

1. Verfahren zum Verbinden zweier Kunststoffteile durch Schmelzen, mit den folgenden Schritten:
- Zusammenbringen der beiden Teile;
- Erwärmen der zusammengebrachten Flächen, bis diese die Schmelztemperatur des Kunststoffmaterials, aus dem die Teile bestehen, erreichen;
- Bewegen der Teile relativ zueinander in einer zu den Passflächen parallelen Richtung, wenn die Flächen geschmolzen sind;
- Festhalten der Teile nach dem Bewegungsschritt und Abkühlen- sowie Verfestigenlassen der Flächen,
**dadurch gekennzeichnet, daß** die Passfläche wenigstens eines der Teile gleichmäßig darüber verteilte Löcher aufweist.

2. Verfahren nach Anspruch 1, bei dem die Teile nicht unmittelbar vor dem Zusammenbringen geglättet werden.

3. Verfahren nach Anspruch 1 oder 2, bei dem die Teile ein Rohr und ein Fitting mit einem Stutzen zur Aufnahme eines Endes des Rohres sind, und bei dem die Richtung die Drehrichtung um die Achse des Rohres ist.

4. Verfahren nach einem der vorhergehenden Ansprüche, bei dem die Löcher Blindlöcher sind.

5. Verfahren nach einem der vorhergehenden Ansprüche, bei dem der Fitting die Löcher aufweist.

6. Kunststoff-Fitting zur Schmelzverbindung mit einem Kunststoffteil, wobei der Fitting eine Passfläche zum Zusammenbringen mit einer entsprechenden Fläche des Teils aufweist, und wobei eine Heizeinrichtung zum Erhöhen der Temperatur der Passfläche des Fittings über die Schmelztemperatur des Kunststoffmaterials des Fittings vorgesehen ist, **dadurch gekennzeichnet, daß** der Fitting ferner mehrere Löcher aufweist, die in der Passfläche des Fittings ausgebildet und über diese Fläche verteilt sind, und daß die Heizeinrichtung einen Elektrofusionskäfig aufweist, der durch Hindurchleiten von elektrischem Strom heizbar ist.

7. Kunststoff-Fitting nach Anspruch 5, bei dem die Löcher Blindlöcher sind.

8. Kunststoff-Fitting nach Anspruch 6 oder 7, bei dem das Teil ein Rohr ist und der Fitting einen Stutzen zum Aufnehmen eines Endes des Rohres aufweist.

9. Kunststoff-Fitting nach einem der Ansprüche 6 bis 8, bei dem der elektrische Strom induktiv erzeugt wird.

10. Kunststoff-Fitting nach einem der Ansprüche 6 bis 9, bei dem die Löcher Öffnungen im Käfig entsprechen.

11. Kunststoff-Fitting nach einem der Ansprüche 6 bis 10, bei dem die Löcher zylindrisch sind.

12. Kunststoff-Fitting nach Anspruch 11, bei dem die Löcher einen Durchmesser von ungefähr 1,25 mm und eine Tiefe von ungefähr 1,25 mm haben.

13. Kunststoff-Fitting nach einem derAnsprüche 6 bis 12, bei dem die Löcher voneinander durch einen Mittenabstand von ungefähr 2,5 mm zwischen benachbarten Löchern beabstandet sind.

14. Kunststoff-Fitting nach einem der Ansprüche 6 bis 13, bei dem das Kunststoffmaterial Polyethylen ist.

## Revendications

1. Procédé d'accouplement de deux pièces en matière plastique par fusion comprenant:
la mise en contact des deux pièces ;
le chauffage des surfaces de contact jusqu'à ce qu'elles atteignent une température de fusion de la matière plastique en laquelle sont fabriquées les pièces ;
le déplacement des pièces l'une par rapport à l'autre alors que leurs surfaces sont fondues dans une direction parallèle aux dites surfaces de contact ;
l'immobilisation des pièces après ledit déplacement et le refroidissement et la solidification des surfaces, **caractérisé en ce que** la surface de contact d'au moins une des pièces possède des trous répartis de manière régulière sur elle.

2. Procédé selon la revendication 1, selon lequel les pièces ne sont pas grattées immédiatement avant ladite mise en contact.

3. Procédé selon la revendication 1 ou 2, selon lequel lesdites pièces sont un tuyau et un raccord possédant un emboîtement pour recevoir une extrémité dudit tuyau, et selon lequel ladite direction est une direction de rotation autour de l'axe du tuyau.

4. Procédé selon l'une quelconque des revendications précédentes selon lequel lesdits trous sont aveugles.

5. Procédé selon l'une quelconque des revendications précédentes, selon lequel lesdits trous sont ménagés sur la raccord.

6. Raccord en matière plastique destiné à être joint à une pièce en matière plastique par fusion, le raccord comprenant une surface de contact adaptée au contact avec une surface correspondante de la pièce, des moyens de chauffage adaptés pour élever la température de la surface de contact du raccord jusqu'à au-dessus de la température de fusion de la matière plastique du raccord, **caractérisé en ce que** le raccord comprend également une pluralité de trous ménagés dans la surface de contact du raccord et répartis sur ladite surface et **en ce que** lesdits moyens de chauffage comprennent une cage d'électrofusion adaptée pour être chauffée par le passage d'un courant électrique à travers elle.

7. Raccord en matière plastique selon la revendication 6, selon lequel lesdits trous sont aveugles.

8. Raccord en matière plastique selon la revendication 6 ou 7, selon lequel ladite pièce est un tuyau et ledit raccord comprend un emboîtement pour recevoir une extrémité du tuyau.

9. Raccord en matière plastique selon l'une quelconque des revendications 6 à 8, selon lequel ledit courant électrique est produit par induction.

10. Raccord en matière plastique selon l'une quelconque des revendications 6 à 9, selon lequel lesdits trous correspondent à des ouvertures dans ladite cage.

11. Raccord en matière plastique selon l'une quelconque des revendications 6 à 10, selon lequel lesdits trous sont cylindriques.

12. Raccord en matière plastique selon la revendication 11, selon lequel lesdits trous ont un diamètre d'environ 1,25 mm et une profondeur d'environ 1,25 mm.

13. Raccord en matière plastique selon l'une quelconque des revendications 6 à 12, selon lequel lesdits trous sont séparés l'un de l'autre d'environ 2,5 mm de centre à centre de trous adjacents.

14. Raccord en matière plastique selon l'une quelconque des revendications 6 à 13, selon lequel ledit matériau en plastique est du polyéthylène.
